Europäisches Patentamt

European Patent Office

Office européen des brevets

(11) Publication number: **0 344 340 B1**

# EUROPEAN PATENT SPECIFICATION

(45) Date of publication of patent specification: **08.04.92**   (51) Int. Cl.⁵: **B65D  77/38**, B65B 7/28

(21) Application number: **88108687.0**

(22) Date of filing: **31.05.88**

(54) **Retortable packaging container.**

(43) Date of publication of application:
**06.12.89 Bulletin  89/49**

(45) Publication of the grant of the patent:
**08.04.92 Bulletin  92/15**

(84) Designated Contracting States:
**DE FR GB**

(56) References cited:
**US-A- 2 343 117**
**US-A- 4 605 142**

(73) Proprietor: **TOYO ALUMINIUM KABUSHIKI KAISHA**
**25-1, Minamikyutaro-cho 4-chome Higashi-ku Osaka(JP)**

(72) Inventor: **Sekiguchi, Tomonobu**
**272-2, Funaochonishi 2-cho Hamadera Sakai-shi Osaka(JP)**
Inventor: **Nagase, Fumiaki**
**7-23, Tanabe 2-chome Kashiwara-shi Osaka(JP)**
Inventor: **Takeuchi, Eiichi**
**1-611, 2, Shiginonishi 2-chome Jyoto-ku Osaka(JP)**
Inventor: **Makimoto, Shoichi**
**3379-204, Shinge Sennan-shi Osaka(JP)**

(74) Representative: **Glawe, Delfs, Moll & Partner Patentanwälte**
**Postfach 26 01 62 Liebherrstrasse 20 W-8000 München 26(DE)**

## Description

The present invention relates to a retortable packaging container for foodstuff comprising a container body having its opening heat-sealed by a lid.

The first requirement for such a container is that it is easily opened by hand. Namely, the lid has to be easily peeled off the container body by hand. For this purpose, the peel strength is usually set at 1.0 - 2.0 kg/15 mm.

On the other hand, the peel strength must be sufficiently high to prevent the heat-sealed portion from puncture during hot water or steam treatment or during transportation. According to Japanese Agricultural standards (JAS), only a foodstuff packed in a container having a peel strength of over 2.3 kg as measured for a specimen cut by 15 mm wide at its heat-sealed portion is allowed to claim to be a retort-sterilizable foodstuff. Such a value is beyond the level at which it is openable by hand.

In other words, in order for the container to reveal good sealability as well as easy-openability, its heat-sealed portion not only has to be highly resistant to the peeling forces from inside of the container, such as those exerted by its content during transportation or handling, but also has to have a low peel strength against the force applied from outside so that the lid will be easily opened.

It is an object of the present invention to provide a heat-sealed container which is retortable and has a high peel strength but can be easily opened by hand.

In accordance with the present invention, there is provided a retortable packaging container comprising a container body and a lid heat-sealed to the container body characterized in that the heat-sealed portion is formed with a groove having a sectional shape gradually deepening from the outer edge thereof toward the inner edge thereof, the inner edge extending in a smoothly curved line while the outer edge extending in a zigzag or meandering line, that the container body has inner layer thereof made of polypropylene; and that the lid has a substrate and a heat sealant layer, the heat sealant layer being made of 5-90 per cent by weight of polypropylene and 95-10 per cent by weight of polyethylene.

The rib formed on the upper or lower mold or heat seal head has such a sectional shape that the pressure on the portion to be heat-sealed will gradually increase from its outer edge toward inner edge. Thus, the heat-sealed portion has a peel strength increasing from the outer edge to the inner edge. Further, because of the zigzag-shaped outer edge line extending transversely to the peel direction, the heat-sealed portion tends to give way to the peeling force applied from outside far more easily than to the force from within the container.

According to the present invention, the heat-sealed portion is formed with a groove having such a sectional shape as to deepen from its outer edge toward its inner edge. The inner edge of the groove forms a smoothly curved line while its outer edge extends in a Zigzag or meandering line. Consequently, the lid can be easily peeled off by pulling it up by hand while it strongly resists to the peeling force from inside at its inner edge portion to protect its content from puncture during transportation or handling. It has been confirmed that these effects are further strengthened by selecting proper resin materials for the lid and the container body and their blending ratio.

The container of the present invention can be produced by basically the same manufacturing method as the conventional one without incurring any extra expenses, but it exhibits excellent properties which the prior art containers do not have.

Other advantages of the present invention will become apparent from the following description taken with reference to the accompanying drawings, in which:

Fig. 1 is a vertical sectional view of the heat seal head used according to the present invention;

Fig. 2 is a top view of the upper mold;

Fig. 3 is an enlarged perspective view of the upper mold;

Fig. 4A and 4B are enlarged sectional views taken along the line IV-IV of Fig. 3;

Figs. 5A to 5E are views showing various examples of profiles of the rib on the upper mold;

Fig. 6 is a sectional view showing how the container is heat-sealed;

Fig. 7 is a sectional view of the heat-sealed container;

Figs. 8A and 8B are sectional views showing other manners how the container is heat-sealed; and

Fig. 9 is a top view of the preferred embodiment.

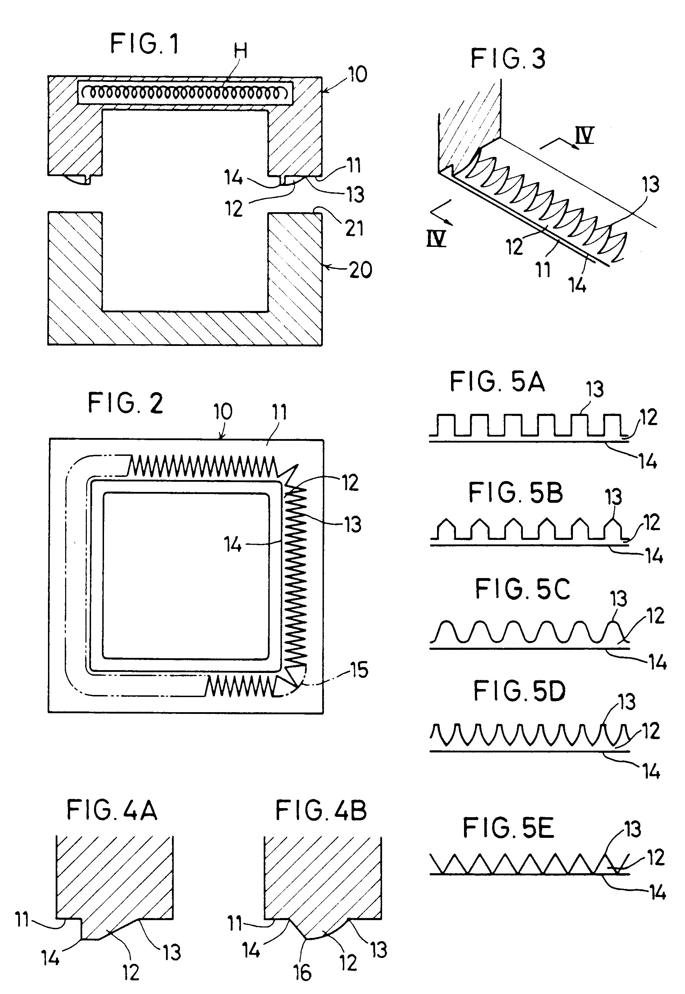

Figs. 1 and 2 show a heat seal head for heat-sealing a lid to a square container body. The heat seal head comprises an upper mold 10 formed on its bottom surface 11 with a rib 12 and a lower mold 20 having a flat pressure receiving surface 21. The letter H represents a heater.

The rib 12 has such a sectional shape that its height will gradually increase from its outer edge 13 to its inner edge 14. Alternatively, the rib may have such a sectional shape as to increase its height from its outer edge halfway toward the inner edge and then extend horizontally to the inner edge as shown in Fig. 4A.

2

Otherwise, as shown in Fig. 4B, the height of the rib may increase from the outer edge 13 to the point shown at 16 and then decrease gradually toward the inner edge 14. In the latter case, the slope extending from the ridge 16 to the inner edge 14 should preferably be steeper than the slope from the ridge 16 to the outer edge 13.

As shown in Figs. 2 and 3, the rib 12 has its inner edge 14 extending in a comparatively smooth line and has its outer edge 13 extending in a zigzag line. The outer edge line 13 should be longer than the inner edge line 14 by more than 30 per cent.

The outer Zigzag edge line 13 may be shaped in any other way. For example, it may take any of the shapes shown in Figs. 5A to 5E or combinations thereof. Also as shown in Fig. 5E, the outer edge line 13 may overlap with the inner edge line 14.

Moreover, the outer edge 13 may not extend meandering over the entire circumference but may curve in more smooth lines at portions other than the tear starting areas e.g. at its corners 15, as shown by chain lines in Fig. 2.

The heat seal head does not have to be square in shape as in the preferred embodiment. If the container to be heat-sealed is triangular, circular or elliptical, then the heat seal head should take a corresponding shape.

The rib 12 may be provided on the lower mold 20 instead of the upper mold 10. Also an elastic member of silicone rubber or the like may be mounted on the opposite surface to the rib 12 provided on the upper or lower mold.

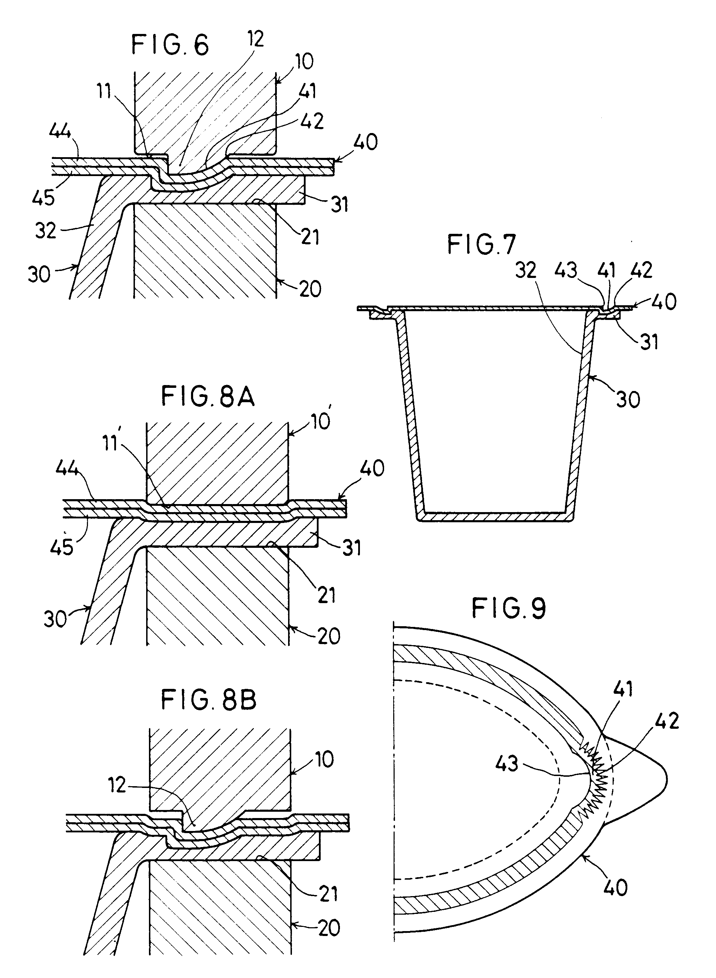

Figs. 6 and 8 show the method for heat-sealing a container by use of the above-described heat seal head. A lid 40 is placed on a flange 31 of a container body 30. The lower mold 20 is positioned so as to support the bottom surface of the flange 31. The upper mold 10 is pressed against the top surface of the lid 40 to heat-seal the lid 40 to the flange 31 and form in the top surface of the lid and the flange a groove 41 complementary to the shape of the rib 12.

Although the groove 41 may deform more or less with the lapse of time after heat-seal, depending upon the heat-seal conditions and the elasticity and shape retention property of the container body 30, its shape immediately after heat seal is precisely complementary to that of the rib 12. Namely, it deepens gradually from its outer edge 42 toward the inner edge 43 and the outer edge line 42 is longer than the inner edge line 43 by more than 30 per cent because the former extends meandering. The inner edge line 43 extends substantially along the outline of an opening 32 of the container body 30, as viewed from top, in a smooth and unmeandering line.

In order for the lid to be readily peeled off the container body 30 when the opening force is exerted from outside, the outer edge line 42 has to be longer than the inner edge line 43 by more than 30 per cent. This is because the less the extent of meandering of the outer edge 42, the more difficult it is to open the lid from outside.

The lid may be heat-sealed to the container body firstly by a conventional upper mold 10' with a flat pressure application surface 11' as shown in Fig. 8A and then by the upper mold 10 having the rib 12 as shown in Fig. 8B. Alternatively, the two members may be used in a reverse order.

The materials of the container body 30 and the lid 40 may be selected freely provided they are heat-sealable and flexible to some extent. For example, the container body 30 may be made of polypropylene or may have its inner layer made of polypropylene for retortability and its outer layer or substrate made of polypropylene, polyethylene terephthalate or aluminium foil. The inner and outer layers may be bonded together by a known two-part dry laminate adhesive.

The lid 40 may be a laminate comprising a substrate 44 made of polyethylene terephthalate, aluminium foil or paper or laminate thereof and a heat sealant layer 45 with an intermediate layer optionally interposed therebetween. The layers may be bonded together with the same adhesive as used for the container body. The heat sealant layer should be a resin layer made of a mixture of 5 - 90 per cent by weight of polypropylene (PP) and 95 - 10 per cent by weight of polyethylene (PE). Isotactic polypropylene (it-PP) having a melt flow index (MFI) of 1 - 15 gram per 10 minutes is preferable as polypropylene. As polyethylene, high-density polyethylene (HDPE), low-density polyethylene (LDPE) or linear low-density polyethylene having a MFI of 0.2 - 20 gram per 10 minutes can be used.

The embodiment will be described in detail below.

Resin films (20 microns thick) with different ratios of it-PP (Density: 0.90 g/cm$^3$, MFI: 8 g/10 minutes) to HDPE (Density: 0.954 g/cm$^3$, MFI: 0.8 g/10 minutes) were prepared by the inflation method.

The resulting films were bonded to aluminium foils 50 microns thick by use of a urethane resin adhesive of the two-component curable type to form lids. The lids were heat-sealed to container bodies filled with water by use of the mold 10 according to the present invention for one second at 200°C under a pressure of 3 kg/cm$^2$. After subjecting the resulting heat-sealed containers to retort-sterilization for 30 minutes at 120°C, their sealability in terms of peel strength (in kg/15 mm wide specimen) against force applied from inside of the heat-sealed portion and easy-openability by hand from outside of the heat-sealed portion were evaluated for each PP/PE ratio. The results were shown below.

| PP/PE ratio | 5/95 | 10/90 | 30/70 | 40/60 | 60/40 | 80/20 | 95/5 |
|---|---|---|---|---|---|---|---|
| Peel strength | 2.0 | 2.3 | 2.5 | 2.5 | 3.0 | 4.0 | 5.0< |
| Easy-openability | Better | Better | Better | Better | Better | Good | Bad |

(Comparison Example)

For comparison, lids were formed of it-PP and PE with two PP/PE ratios of 0/100 and 100/0. The lids were heat-sealed to container bodies by use of the conventional mold 10′ having a flat surface on the same condition. The containers made in the same manner as above were tested for peel strength and easy-openability. The results were as shown below.

| PP/PE ratio | 0/100 | 100/0 |
|---|---|---|
| Peel strength | 1.0 | 10< |
| Easy-openability | Good | Bad |

The results show that if the PP content is less than 5 per cent, the sealability markedly decreases and if it is more than 90 per cent, the lid becomes difficult to open. The preferred contents are 10-40 per cent for polypropylene to 90 - 60 per cent for polyethylene.

The container body 30 may be square, polygonal, circular or in any other shape as viewed from top. Also as shown in Fig. 9, the flange 31 should preferably have its opposite outer edge portions semicircularly protruding so that the lid will be more readily peeled off by holding these semicircular portions. In the embodiment of Fig. 9, the container body is oval and the outer edge 42 extends in a zigzag line only at the opposite protruding portions.

## Claims

1. A retortable packaging container comprising a container body and a lid heat-sealed to said container body characterized in:

that the heat-sealed portion is formed with a groove having a sectional shape gradually deepening from the outer edge thereof toward the inner edge thereof, said inner edge extending in a smoothly curved line while said outer edge extending in a zigzag or meandering line;

that said container body has inner layer thereof made of polypropylene; and

that said lid has a substrate and a heat sealant layer, said heat sealant layer being made of 5-90 per cent by weight of polypropylene and 95-10 per cent by weight of polyethylene.

## Revendications

1. Récipient d'emballage résistant à l'étuvage comprenant un corps de récipient et un couvercle thermoscellé audit corps de récipient, caractérisé en ce que :

la partie thermoscellée comporte une rainure dont la forme en section s'enfonce progressivement à partir de son bord extérieur vers son bord intérieur, ledit bord intérieur formant une ligne courbe régulière tandis que ledit bord extérieur forme une ligne en zigzag ou sinueuse ;

ledit corps de récipient possède une couche intérieure en polypropylène ; et

ledit couvercle présente une couche de base et une couche de thermoscellage, ladite couche de thermoscellage étant composée de 5 à 90% en poids de polypropylène et de 95 à 10% en poids de polyéthylène.

## Patentansprüche

1. Wärmebeständiger Verpackungsbehälter mit einem Behälterkörper und einem mit dem Behälterkörper heiß versiegeltem Deckel, dadurch **gekennzeichnet,**

4

daß der heiß versiegelte Bereich mit einer Nut ausgebildet ist, welche eine Profilform aufweist, die sich von der Außenkante der Nut in Richtung deren Innenkante allmählich vertieft, wobei sich die Innenkante in einer gleichmäßig gekrümmten Linie erstreckt, während sich die Außenkante in Zickzack- oder Schlangenlinie erstreckt;

daß die Innenschicht des Behälters aus Polypropylen hergestellt ist; und

daß der Deckel eine Substrat- und eine heiß versiegelte Schicht aufweist, wobei die heiß versiegelte Schicht aus 5 - 90 Gew.-% Polypropylen und 95 - 10 Gew.-% Polyethylen hergestellt ist.

FIG.1

FIG.3

FIG.2

FIG.4A

FIG.4B

FIG.5A

FIG.5B

FIG.5C

FIG.5D

FIG.5E

FIG.6

FIG.7

FIG.8A

FIG.8B

FIG.9